Europäisches Patentamt

European Patent Office

Office européen des brevets

(19)

(11) EP 1 319 970 A1

(12) **DEMANDE DE BREVET EUROPEEN**

(43) Date de publication:
**18.06.2003 Bulletin 2003/25**

(51) Int Cl.⁷: $G02B\ 27/01$

(21) Numéro de dépôt: 02292927.7

(22) Date de dépôt: **27.11.2002**

(84) Etats contractants désignés:
**AT BE BG CH CY CZ DE DK EE ES FI FR GB GR
IE IT LI LU MC NL PT SE SK TR**
Etats d'extension désignés:
**AL LT LV MK RO SI**

(30) Priorité: **13.12.2001 FR 0116145**

(71) Demandeur: **VALEO VISION
93012 Bobigny Cédex (FR)**

(72) Inventeurs:
• **Leleve, Joel
93800 Epinay sur Seine (FR)**
• **Coutte, Cyrille
77100 Meaux (FR)**
• **Albou, Pierre
75013 Paris (FR)**

(54) **Procédé de correction d'image pour un projecteur d'images tête haute, et dispositif mettant en oeuvre le procédé**

(57) La présente invention concerne un procédé de correction d'image pour afficheur tête haute. Elle concerne aussi un dispositif mettant en oeuvre un tel procédé.

Selon l'invention, le procédé de correction consiste essentiellement à produire une image corrigée avant sa projection vers le pare-brise (2) du véhicule (1) par un projecteur (3) d'images tête haute de sorte que le défaut de dédoublement caractérisé du pare-brise (2) soit minimisé.

Dans un mode de réalisation, le traitement de correction consiste à inverser a priori la matrice caractéristique du dédoublement produit par le pare-brise.

Dans un autre mode de réalisation, le traitement de correction consiste à produire une image corrigée de manière adaptative en minimisant une fonction d'erreur sous un seuil prédéterminé.

Application aux projecteurs d'images tête haute pour véhicules automobiles.

Figure 1

## Description

La présente invention concerne un procédé de correction d'image pour un afficheur dit "tête haute". Elle concerne aussi un dispositif mettant en oeuvre un tel procédé.

Dans l'état de la technique, on a déjà décrit des dispositifs de projection d'image pour produire une image se réfléchissant sur le pare-brise avant d'un véhicule. L'affichage d'une telle image permet de réaliser une visualisation d'informations en position dit "tête haute", le conducteur pouvant consulter ces informations sans tourner la tête vers un cadran ou un autre afficheur ou dispositif d'affichage disposé classiquement par exemple dans la planche de bord.

Toutefois, les pare-brises des véhicules sont constitués par des plaques feuilletées de verre et/ou de polymères qui produisent des réflexions et des réfractions multiples. Autrement dit, à chaque traversée dans le pare-brise d'une interface entre deux lames de verre et/ou de polymère, le rayon lumineux émis par un projecteur d'affichage tête haute subit une réflexion et une réfraction, de sorte que l'observateur perçoit une image perturbée qui est par exemple au moins dédoublée.

Pour porter remède à ces inconvénients, on a proposé d'utiliser localement sur le pare-brise des couches semi-réfléchissantes ou des réflecteurs holographiques qui présentent, pour une longueur d'onde donnée, une réflectivité très élevée, ce qui rend négligeables les autres réflexions. Comme ces couches sont sensiblement transparentes en lumière naturelle, elles ne devraient en principe pas gêner la vision directe du conducteur.

Toutefois, la couche semi-réfléchissante est visible en raison de la dépendance angulaire de sa réponse en réflexion. Cet inconvénient provoque une gêne pour la vision du conducteur. Plus encore, pour des raisons de sécurité, cette déformation locale est interdite dans certaines zones du pare-brise par la plupart des réglementations du domaine de l'automobile.

C'est un objet de l'invention d'éviter les gênes à la vision à travers le pare-brise lorsqu'un projecteur d'images tête haute est utilisé.

C'est un autre objet de l'invention d'éviter d'avoir à intégrer ou à associer un dispositif optique coûteux, et lui-même gênant, dans le pare-brise d'un véhicule équipé d'un projecteur d'images tête haute.

Pour atteindre ces objets, la présente invention propose un procédé de correction d'image pour un projecteur d'images tête haute qui se caractérise par les étapes suivantes :

- production d'une image numérique sous forme d'une matrice dont chaque cellule représente un point de l'image à visualiser par projection ;
- application d'un traitement de correction dépendant des caractéristiques optiques et géométriques du pare-brise produisant une déformation de l'image projetée de sorte que l'effet de dédoublement de l'image visualisée soit réduit ;
- production du flux lumineux vers le pare-brise.

Selon un aspect de l'invention, l'étape de traitement de correction de l'image consiste à décaler, dans une direction opposée à la direction de dédoublement, chaque ligne horizontale de la matrice produite d'un nombre prédéterminé de lignes d'image.

Selon un aspect de l'invention, l'étape de traitement de correction consiste à produire une matrice de correction calculée par inversion matricielle d'une matrice caractéristique du dédoublement d'image produit par le pare-brise et à appliquer un produit matriciel avec la matrice à afficher pour produire la matrice corrigée à projeter vers le pare-brise.

Selon un autre aspect de l'invention, l'étape de traitement de correction comporte de plus une étape de décalage des valeurs de la matrice corrigée de sorte qu'aucune valeur de la matrice ne soit négative.

Selon un autre aspect de l'invention, l'étape de décalage des valeurs de la matrice corrigée est suivie d'une étape de réduction de la dynamique de la matrice corrigée.

Selon un autre aspect de l'invention, en fonction des contrastes mesurés sur la matrice corrigée une étape d'amplification des contrastes sur l'image générée initialement est prévue de façon à apporter une image de projection présentant des contrastes supérieurs à un seuil prédéterminé.

Selon un autre aspect de l'invention, l'étape de traitement de correction consiste à produire une matrice d'erreur, constituée par la différence entre une matrice de simulation de l'effet de dédoublement introduit par le pare-brise et la matrice effectivement générée, puis à produire un critère d'erreur et à modifier les cellules de la matrice de l'image à projeter en cours d'adaptation, de façon à minimiser la matrice d'erreur et/ou une mesure scalaire de celle-ci.

Selon un autre aspect de l'invention, l'étape de production d'un critère d'erreur consiste à projeter les valeurs de ladite matrice de simulation de l'effet de dédoublement de l'image à projeter dans un espace de valeurs compris entre 0 et 1, à en déduire un critère scalaire d'erreur selon une fonction prédéterminée, comme la somme des valeurs absolues des écarts entre la matrice de simulation et de la matrice à projeter, et à modifier les cellules de la matrice à projeter de façon à ce que le critère scalaire d'erreur soit inférieur à un seuil prédéterminé.

Selon un autre aspect de l'invention, chaque colonne de la matrice à projeter est, au cours du processus de minimisation de l'erreur, partagé en plusieurs sous-colonnes pour réduire le nombre de composants de minimisation.

Selon un autre aspect de l'invention, le critère de minimisation de l'erreur est établi de façon à respecter les transitions dans l'image à projeter, en appliquant un opérateur matriciel de gradient sur une simulation du dédoublement de l'image à projeter et en testant la minimisation sur le gradient de l'image à projeter et le gradient de la simulation du dédoublement de l'image d'origine.

Selon un autre aspect de l'invention, l'étape de minimisation du critère comporte le calcul d'une combinaison linéaire prédéterminée d'un critère de distance et d'un critère sur les dérivées.

Selon un autre aspect de l'invention, l'étape de calcul du critère de minimisation de l'erreur comporte une étape de calcul du logarithme pour tenir compte de la dynamique de l'oeil.

L'invention propose aussi un dispositif mettant en oeuvre le procédé selon l'invention pour son application à un projecteur d'image sur un pare-brise de véhicule automobile.

Le dispositif de l'invention se caractérise essentiellement par le fait qu'il comporte :

- un générateur d'images à projeter ;
- un correcteur d'images appliquant un traitement de correction dépendant des caractéristiques optiques et géométriques du pare-brise produisant une déformation de l'image projetée de sorte que l'effet de dédoublement de l'image visualisée soit réduit ;
- un projecteur d'images vers le pare-brise qui reçoit l'image après traitement et produit un flux lumineux à réfléchir au moins partiellement vers le pare-brise.

D'autres caractéristiques et avantages de la présente invention seront mieux compris à l'aide de la description des figures annexées qui sont :

- la figure 1 : un schéma pour expliquer le problème du dédoublement de l'image dans un projecteur d'image tête haute ;
- la figure 2 : un schéma blocs d'un dispositif de projection tête haute mettant en oeuvre le procédé de l'invention ;
- la figure 3 : un organigramme d'un premier mode de réalisation du procédé de correction de l'invention ;
- la figure 4 : un schéma blocs d'une partie d'un dispositif de mise en oeuvre du procédé de l'invention dans un mode particulier de réalisation.

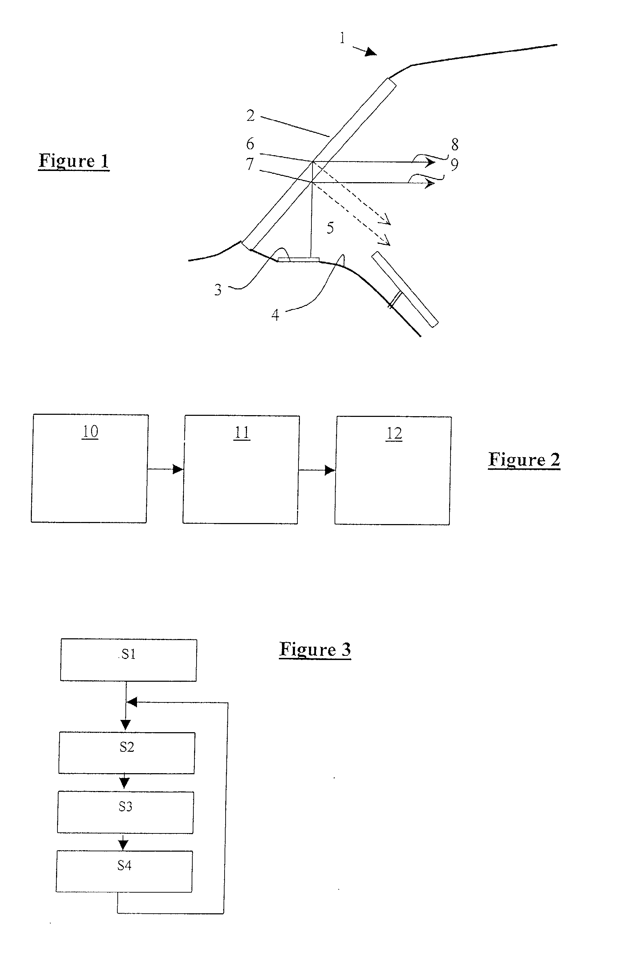

A la figure 1, on a représenté un diagramme expliquant le problème du dédoublement de l'image dans un projecteur d'image tête haute.

Le projecteur d'image tête haute est installé sur la planche de bord 4 d'un véhicule 1. Le projecteur d'image tête haute comporte une surface émettrice d'image constituée par un panneau à cristaux liquides 3 qui émet une lumière sous forme de rayons parallèles comme le rayon 5. Le rayon 5 frappe le pare-brise 2 sur sa face intérieure au véhicule 1 en un point d'incidence 5 et selon les lois de l'optique produit un rayon réfléchi 9 présentant une première intensité 1(9) et un rayon . réfracté présentant une seconde intensité R(9).

Le rayon réfracté d'intensité R(9) poursuit son trajet dans l'épaisseur du pare-brise et traverse ensuite le dioptre verre-air constitué par la surface de séparation du pare-brise 2 avec l'air extérieur au véhicule 1 au point 6. Comme précédemment expliqué, le rayon lumineux subit une réflexion partielle et une réfraction partielle, de sorte qu'un rayon réfléchi (non repéré au dessin) revient vers l'intérieur du véhicule et traverse à nouveau la surface de séparation entre le matériau du pare-brise et l'air intérieur du véhicule 1. Il en résulte une troisième séparation de l'intensité lumineuse et un rayon réfracté 8 est alors produit qui permet à un observateur à la place du conducteur de recevoir une image affaiblie et décalée de l'image produite selon la première réflexion du rayon 9.

On conçoit que, dans certaines circonstances, d'autres rayons réfractés peuvent être produits par exemple quand l'intensité de l'image initialement émise est suffisante pour que d'autres réfractions soient encore sensibles un troisième rayon analogue aux rayons 9 et 8 et encore décalé vers le haut pouvant être perceptibles alors.

On conçoit aussi que, dans le cas des pare-brises feuilletés, un plus grand nombre de dioptres sont rencontrés sur le trajet optique de propagation des rayons émis par la surface de projection 3 et qu'il se produit ainsi un plus grand nombre de rayons transmis vers l'observateur de l'image d'un seul point de la surface de projection 3.

Dans l'état de la technique, une zone du pare-brise est réservée pour recevoir un dispositif optique à bases de prismes ou de générateurs d'hologrammes pour permettre de réduire les dédoublements d'image décrits ci-dessus.

Mais, ainsi qu'on l'a indiqué dans le préambule, il en résulte des inconvénients tant dans la fabrication du pare-brise que dans le confort d'utilisation d'un projecteur d'images tête haute, ce dernier point particulièrement parce que l'affichage d'informations ne pourra alors se faire que dans un espace relativement réduit de la surface de pare-brise, espace sur lequel est implémentée l'optique de correction contre le dédoublement d'image.

Or, selon les circonstances de conduite, particulièrement en cas de conduite nocturne et quand le véhicule 1 est équipé d'un appareil d'assistance à la vision nocturne, il est important que le maximum de la zone de visibilité du pare-brise puisse accueillir une image produite par le projecteur d'images tête haute.

Selon l'invention, le pare-brise n'a plus besoin d'être modifié et en fonction des caractéristiques géométriques et optiques préenregistrées du pare-brise 2, le procédé de l'invention consiste à générer une image déformée au niveau de la surface émettrice d'image tête haute 3 de sorte que l'effet de dédoublement (au sens large) produit par le pare-brise 2 soit corrigé.

A la figure 2, on a représenté un schéma bloc d'un dispositif mettant en oeuvre le procédé de l'invention.

L'image à projeter est produite par un générateur d'images 10. Le générateur 10 produit chaque image sous forme d'une matrice dont chaque cellule correspond à la caractéristique d'un point de l'image que l'on veut présenter à l'observateur. Particulièrement dans le cas d'une image en échelle de gris, chaque cellule est limitée à un nombre positif compris entre 0 et une valeur maximale correspondant au maximum d'intensité du rayon 9 que l'on désire projeter. Dans le cas d'une image en couleurs, chaque cellule contient une sous-matrice ou vecteur dont chaque cellule comprend un nombre représentatif de la composante chromatique du rayon 9 que l'on désire projeter.

Le générateur d'images 10 peut être relié à la sortie d'un dispositif d'assistance à la vision ou à la vision nocturne, comportant une caméra ou une caméra infrarouge, un circuit d'analyse et de traitement d'image produite par la caméra et un circuit de sortie connecté à l'entrée du générateur d'images 10.

Le générateur d'images 10 peut être relié à la sortie d'un dispositif d'affichage d'une image de cartographie produite par un dispositif de guidage routier équipé d'un lecteur de CD Rom ou d'une liaison GPS et d'un circuit de présentation d'informations de route ainsi qu'il est connu dans l'état de la technique.

Le générateur d'images 10 peut être relié à la sortie d'un dispositif d'affichage d'informations générées par le calculateur embarqué à bord du véhicule de façon à présenter des informations visuelles sous formes d'icônes représentant diverses situations d'alarme ou d'état de composants du véhicule ou encore des messages alphanumériques comme l'indication de la vitesse du véhicule ou le niveau du réservoir de carburant ou le niveau de charge de la batterie électrique.

Le générateur d'images 10 applique au signal qui lui est appliqué en entrée un traitement de mise en forme de chaque matrice représentative de l'image à présenter au conducteur dans le véhicule 2 de façon à permettre son exploitation dans la suite du dispositif de l'invention. Particulièrement, le générateur d'images 10 peut comporter séparément ou en combinaison :

- un circuit pour transformer la matrice représentative de l'image d'entrée en une matrice carrée ;
- un circuit pour adapter la dynamique de l'image ;
- un circuit pour adapter les contrastes dans l'image.

Le dispositif comporte ensuite un correcteur d'images 11 connecté à la sortie du générateur d'images 10. Le correcteur d'images 11 applique un traitement de correction dépendant des caractéristiques optiques et géométriques du pare-brise 2 ainsi qu'ils ont été décrits à l'aide de la figure 1. Le traitement de l'invention consiste essentiellement à appliquer une déformation de l'image projetée de sorte que l'effet de dédoublement de l'image visualisée par projection sur le pare-brise 2 soit réduit. On décrira dans la suite la nature de ce traitement de correction.

Le dispositif comporte ensuite un projecteur d'images 12 vers le pare-brise 2 qui reçoit l'image après traitement et produit un flux lumineux à réfléchir au moins partiellement vers le pare-brise 2, le flux lumineux étant produit dans un mode de réalisation de l'invention par un panneau à cristaux liquides équipé le cas échéant d'une lentille de projection. Dans d'autres modes de réalisation, le flux lumineux est produit à l'aide :

- d'un panneau à plasma ;
- d'un panneau de diodes électroluminescentes, discrètes ou intégrées ;
- un tube à rayons cathodiques miniature.

Le projecteur d'images 12 est équipé d'un circuit de réglage du flux lumineux et des autres caractéristiques de l'image projetée à disposition du conducteur et/ou d'un automate (non représenté) prévu pour adapter le flux lumineux de l'image projetée aux circonstances optiques détectées sur le pare-brise comme le niveau d'ensoleillement ou l'apparition d'un faisceau produit par les projecteurs des véhicules venant en face du véhicule équipé du dispositif de l'invention.

Dans la suite de la description, on va considérer le cas où l'image produite par le générateur d'images 10 est représentée par une matrice carrée définie positive à coefficients entiers.

La déformation appliquée par un pare-brise 2 est représentée par une fonction de transformation matricielle D() de telle sorte que l'image projetée par le projecteur 3 étant représentée par une matrice B, l'image réfléchie par le pare-brise 2 vers le conducteur dans le véhicule 1 est représentée par une matrice C définie par la relation :

$$C = D(B). \tag{1}$$

Les inventeurs ont constaté que la déformation D() appliquée par le pare-brise 2 était correctement représentée dans la majorité des cas par une relation de la forme :

$$C = \rho(I + D_k)B \tag{2}$$

dans laquelle $\rho$ représente le coefficient de réflexion global appliqué par le pare-brise 2 et $I$ est la matrice unité, dont tous les éléments non diagonaux sont nuls et la diagonale principale est composée de cellules valant 1.

Pour simplifier l'exposé de l'invention, on a considéré un pare-brise sensiblement homogène et plan. L'homme de métier saura adapter la présente description au cas d'un pare-brise complexe présentant une courbure prédéterminée et, le cas échéant, une loi de réflexion globale prédéterminée variant selon la position de l'image projetée sur le pare-brise 2.

Dans un mode préféré de réalisation du procédé de l'invention, la matrice $D_k$ est constituée par une matrice carrée dont tous les éléments sont nuls sauf la k-ième diagonale dont chaque cellule vaut $(1 - \rho)$.

La déformation produite correspond à un décalage vers le haut du pare-brise de l'image réellement réfléchie vers le conducteur.

Le terme en $(1 - \rho)$ correspond à une seconde réflexion sur la face arrière du pare-brise 2. Il est clair que le terme en $(1 - \rho)$ peut ne pas être constant le long de la k-ième diagonale si les caractéristiques optiques du pare-brise sont variables le long d'une direction verticale le long du pare-brise. Dans ce cas, l'homme de métier saura adapter le traitement décrit.

De même, plusieurs matrices $D_k$ peuvent être utilisées particulièrement si le pare-brise 2 est présenté sous la forme d'une pluralité de couches dont les surfaces en contact constituent des dioptres distincts. Les valeurs de k et des éléments de la k-ième diagonale non nulle sont elles-mêmes déterminées par mesure préalable lors de la configuration du dispositif de mise en oeuvre du procédé de l'invention pour l'adapter à un pare-brise 2 et à un véhicule 1 particulier.

Dans un autre mode de réalisation, la matrice D est constituée d'un arrangement bidimensionnel de cellules représentatives du comportement optique complexe en transmission et en réflexion de chaque point du pare-brise 2 qui est frappé par un rayon 5 issu du projecteur d'images 3. Ainsi D[i][j] est le coefficient ou un bloc de coefficients mesurant la transmission et la réflexion du rayon 5 parvenant en un point M[x][y] de la zone correspondante sur le pare-brise 2. Un tel coefficient peut être exprimé par une fonction analytique de $\rho$, coefficient de réflexion sur le premier dioptre rencontré par le rayon 5 avec le pare-brise 2.

Dans un tel cas, l'équation (1) ci-dessus est ré écrite sous la forme :

$$C = \sum_k \left( R + D_k \right) B \tag{3}$$

dans laquelle :

- les diverses valeurs de k correspondent à chacun des décalages verticaux appliqués par chacun des dioptres contenus dans l'épaisseur du pare-brise 2,
- $R$ est une matrice diagonale dans laquelle le r-ième élément correspond aux caractéristiques optiques de la zone d'incidence sur le pare-brise en relation géométrique avec ledit r-ième élément et
- $D_k$ est la matrice de déviation verticale de k lignes associée à l'effet de dédoublement de l'un des dioptres du pare-brise 2, dont la k-ième diagonale non nulle comporte un r-ième élément correspond aux caractéristiques optiques de la zone d'incidence sur le pare-brise en relation géométrique avec ledit r-ième élément.

Dans un autre mode de réalisation, le coefficient de réflexion global $\rho$ est dépendant de la longueur d'onde et donc de la couleur produite par le projecteur d'images 3. Il en résulte que dans ce cas, le traitement de correction de dédoublement prend en compte l'adaptation de chaque terme des matrices $D_k$ ou du terme de la matrice diagonale $R$ de l'équation (3).

Dans un autre mode de réalisation, à cause du placement du projecteur 3 d'images tête haute sur la planche de bord 4 du véhicule 2, l'angle d'émission des rayons projetés 5 peut être différent de la direction indiquée à la figure 1 et particulier ne pas être constante le long de la surface émissive du projecteur 3. Dans ce cas, et aussi si le projecteur 3 porte une optique de traitement de la projection, les caractéristiques optiques sont affectées selon une loi déterminée que l'homme de métier saura adapter sur le traitement matriciel D() décrit ci-dessus.

Dans un autre mode de réalisation, l'image à projeter est une image en perspective et destinée à une vision binoculaire. Une loi de correction particulière doit alors être déterminée et adaptée au traitement matriciel D() décrit ci-dessus.

Selon le procédé de l'invention, une inversion du traitement matriciel D() équivalent à l'effet de dédoublement du pare-brise 2 est exécutée sur la matrice A de l'image en appliquant un traitement de correction T() défini par la relation :

$$T(A) = (R + D_k)^{-1} A \qquad (4)$$

avec les notations de l'équation (3) décrite ci-dessus pour deux dioptres seulement constitués par les deux faces du pare-brise 2 et dans laquelle A est une matrice carrée définie positive entière représentant l'image appliquée à l'entrée du circuit de correction 11 par le générateur d'images 11 du dispositif de mise en oeuvre du procédé de l'invention.

Le principe de l'invention est donc de produire une matrice B d'image corrigée définie par la relation matricielle :

$$B = T \times A \qquad (6)$$

dans laquelle T est la matrice d'inversion déduite de l'opération décrite ci-dessus à l'équation (5) en fonction des caractéristiques optiques et géométriques du pare-brise et, le cas échéant, du projecteur 3 proprement dit. L'homme de métier saura appliquer l'inversion aux diverses situations décrites ci-dessus.

Le procédé de l'invention consiste alors à exécuter une inversion matricielle selon des méthodes bien connues. A cette fin, les divers coefficients des matrices $R$ et $D_k$ sont préalablement chargés dans des mémoires convenables du circuit de correction 11.

C'est parce que le traitement d'inversion ne dépend pas de la matrice d'image A présentée en entrée qu'il est déterminé sous forme d'une matrice T carrée, calculée lors de la configuration du dispositif de mise en oeuvre en fonction des caractéristiques géométriques et optiques notamment du projecteur 3 et du pare-brise 2 du véhicule sur lequel il est disposé et enregistrée dans une mémoire convenable.

Cependant, dans la majorité des projecteurs 3 d'images tête haute, il est impossible de projeter une image présentant des coefficients négatifs. Or, le traitement d'inversion d'une matrice carrée définie positive comme la matrice D représentative du dédoublement introduit par le pare-brise 2, produit des coefficients négatifs.

A la figure 3, on a représenté un organigramme d'un second mode de réalisation du procédé de correction de l'invention. Dans ce mode de réalisation, le procédé de correction consiste après l'étape de configuration S1 dans laquelle la matrice d'inversion T a été calculée et enregistrée, à produire lors d'une seconde étape S2 une image A à afficher pour le conducteur à l'aide du générateur d'image 10 (Figure 2) et à exécuter le produit matriciel défini par la relation :

$$B1 = T \times A \qquad (6)$$

Pour porter remède à la présence de cellules négatives dans la matrice B1, dans le cas notamment d'un projecteur 3 en lumière incohérente, il est prévu dans une troisième étape S3 mode de réalisation du procédé de l'invention de réaliser une seconde étape de correction après l'exécution de l'équation (5) à la première étape en appliquant un décalage des valeurs des cellules de la matrice B de façon à ce que la plus négative d'entre elles devienne une valeur nulle. Le cas échéant, il est ensuite procédé, pour éviter une saturation de la valeur la plus positive des cellules de la matrice B1, à une réduction de la dynamique de la matrice B1 déclarée de sorte que la valeur la plus positive de la matrice B1, après le décalage vers des valeurs supérieures des valeurs négatives de la matrice B1, soit inférieure à la valeur de saturation de l'image, c'est-à-dire à la valeur maximale de brillance dans une échelle de gris, comme 255 pour un codage d'image sur 8 bits.

Dans un mode particulier de réalisation, on procède successivement :

- au calcul de la matrice B1 = T x A ;
- au calcul de la valeur DECAL(B1) = MIN(B1)
- au calcul de la valeur DYN(B1) = MAX(B1)

- au calcul de la matrice définie par :

$$B = \frac{1}{DECAL(B1) + DYN(B1)}\big(B1 + DECAL(B1) \times [1]\big) \qquad (7)$$

dans laquelle :

- la fonction scalaire DECAL() permet de déterminer le décalage pour rendre positif chacune des cellules de la matrice B1, préférentiellement en recherchant la plus petite valeur, c'est-à-dire la valeur la plus négative de B1 par l'opérateur MIN() ;
- la fonction scalaire DYN() permet de déterminer la dynamique de l'image B1, préférentiellement en recherchant la valeur la plus positive de la B1 par l'opérateur MAX() ;
- la matrice [1] est la matrice de même dimension que B1 qui contient des 1 partout.

La matrice B produite est alors, lors d'une étape S4, projetée à l'aide du projecteur d'images tête haute 12 (dispositif de mise en oeuvre de la figure 2). Le contrôle retourne alors à l'étape S2 sauf si l'affichage des images A est interrompu.

Cependant, on constate que ce traitement produit une réduction des contrastes de l'image projetée à l'aide du projecteur 3.

Selon un autre mode de réalisation de l'invention, une solution consiste donc à renforcer l'image A produite par le générateur d'images A à projeter (générateur 10 de la figure 2) en appliquant un gain multiplicatif supérieur à 1 destiné à produire une image B de correction dont le contraste sera suffisant.

Dans un mode de réalisation, le gain d'amplification de l'image A produite par le générateur d'images à projeter 10 est réglé manuellement à l'aide d'un bouton de réglage sur le tableau de bord du véhicule par l'utilisateur.

Dans un autre mode de réalisation, le gain d'amplification de l'image A produite par le générateur d'images à projeter 10 est réglé automatiquement par un module de détection de contrastes sur l'image B1 produite à l'issue de l'étape S2 (Figure 3) et est automatiquement remonté par rapport à une valeur de seuil prédéterminée.

Dans une autre approche du problème de l'inversion de la matrice représentative de la déformation par dédoublement introduite par le pare-brise, le procédé de l'invention consiste à exécuter une adaptation de l'image produite A par le générateur 10 d'images à projeter (Figure 2) de façon à ce qu'une matrice d'erreur de correction soit rendue minimale.

Dans ce mode de réalisation de l'invention, la matrice E d'erreur de correction est déterminée par la relation :

$$E = D \times B - A \qquad (8)$$

avec les notations précédentes.

La matrice B produite à la sortie du module 11 de correction d'erreur de dédoublement (Figure 2) est initialisée sur la matrice A. Puis, chacun de ses coefficients est ensuite calculé de façon à minimiser une fonction de mesure d'erreur qui est analogue à une norme de la matrice E définie à la relation (8).

Dans un premier mode de réalisation, cette seconde approche du problème de l'inversion de la matrice M consiste à calculer un scalaire de minimisation selon la relation :

$$CRITERE = \sum_i \big(D \times sigmo(C_i) - V \times Rapp\big)^2 \qquad (9)$$

relation dans laquelle :

- D représente la matrice représentative de l'effet de dédoublement de l'image introduite par le pare-brise 2 définie selon ce qui a été décrit précédemment ;
- sigmo() est un fonction qui projette l'espace réel des cellules de la matrice *B* en cours d'adaptation dans un intervalle compris entre 0 et 1 et qui est définie par la relation :

$$sigmo(x) = \frac{1 - e^{\frac{x}{2}}}{1 + e^{\frac{x}{2}}} \times \frac{1}{2} \qquad (10)$$

dans laquelle x est la valeur d'une cellule quelconque de la colonne $C_i$ de la matrice en cours d'adaptation $B$ ;

- V est un premier coefficient prédéterminé enregistré par avance dans une mémoire du module de correction 11 qui dépend du nombre de sous-colonnes déterminées par avance dans chaque colonne $C_i$ de la matrice en cours d'adaptation $B$ ; et

- Rapp est un second coefficient prédéterminé défini à partir de la mesure du rapport de l'intensité lumineuse recueillie après une réflexion sur le pare-brise 2 sur un rayon comme le rayon 8 (Figure 1) à l'intensité lumineuse incidente produite par l'image B sur un rayon comme le rayon 5 (Figure 1).

La décomposition de chaque colonne $C_i$ de la matrice en cours d'adaptation $B$ en sous colonnes partielles permet d'effectuer des minimisations sur un nombre plus faible de composantes de chaque colonne.

On remarque que le calcul d'adaptation est ici présenté à partir de colonnes, c'est-à-dire, d'éléments vectoriels dans la direction perpendiculaire au dédoublement majoritaire dans l'image qui est un dédoublement en lignes, ainsi que les inventeurs l'ont rencontré dans les applications les plus courantes. il est clair que si le dédoublement de l'image avait lieu par décalage de colonnes dans l'image projetée, le traitement adaptatif aurait lieu par lignes. Si le dédoublement de l'image est plus complexe, il peut être représenté par une combinaison linéaire des deux traitements adaptatifs en lignes et en colonnes.

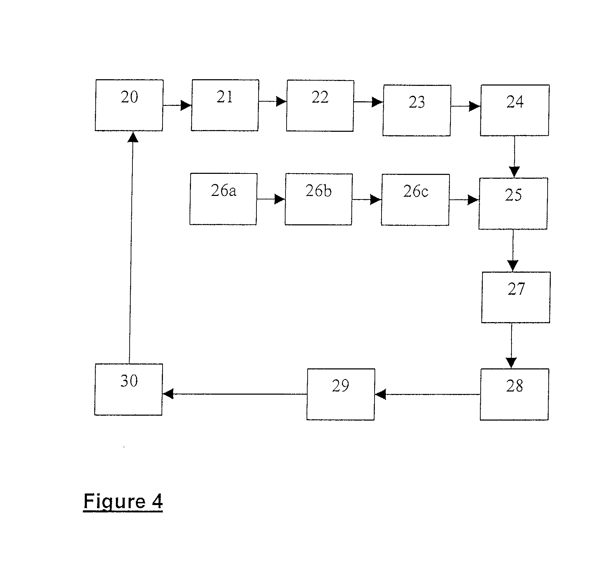

Dans un mode de réalisation d'un dispositif de mise en oeuvre du procédé défini ci-dessus, le module de correction 11 tel que représenté à la figure 4 comporte :

- un registre 20 comportant l'enregistrement d'une variable représentative d'une colonne $C_i$ de la matrice en cours d'adaptation $B$ ou d'une sous-colonne de celle-ci qui est une partie de la matrice corrigée qui sera, à la fin du traitement adaptatif émis vers le circuit 12 générateur de l'image corrigée à projeter par le projecteur 3 d'images tête haute ;

- un module 21 appliquant la fonction sigmo() définie ci-dessus à chaque composante de la colonne $C_i$ de la matrice en cours d'adaptation $B$ ou de chaque sous-colonne déterminée dans le registre 20 ;

- un registre 22 enregistrant à chaque étape du traitement adaptatif de correction le résultat du traitement de l'opérateur 21 de façon à maintenir la valeur de la colonne $C_i$ de la matrice en cours d'adaptation $B$ ou de chaque sous-colonne ;

- un multiplieur 23 par la matrice D représentative de l'effet de dédoublement appliqué par le pare-brise 2 et enregistrée dans une mémoire initialement chargé en fonction des caractéristiques optiques et géométriques du dit pare-brise ;

- un registre 24 pour enregistrer le résultat du produit matriciel appliqué par l'opérateur 23 et qui représente une colonne de l'image telle qu'elle serait effectivement visualisée à travers le pare-brise 2 ;

- un soustracteur 25 dont une première entrée négative reçoit la colonne en cours de calcul de la visualisation estimée en sortie du registre 24 et dont une seconde entrée positive est connectée à la sortie d'un multiplieur 26c par une seconde constante prédéterminée Rapp selon ce qui a été décrit ci-dessus à l'aide de l'équation (9), de façon à composer la matrice d'erreur E décrite ci-dessus ;

- un circuit 26a de sélection d'une colonne de la matrice en cours d'adaptation $A$ correspondant à la sous-colonne $C_i$ de la matrice $B$ lors de la première passe du processus d'adaptation pour produire la matrice $B$ corrigée d'image à projeter qui comporte donc une borne d'entrée connectée à la borne de sortie du générateur 10 d'images A à corriger avant projection ;

- un circuit 26b dont la borne d'entrée est connectée à une borne de sortie du circuit 26a pour recevoir la colonnes $C_i$ de la matrice en cours d'adaptation $A$ ou chaque sous-colonne de celle-ci et pour appliquer l'opérateur sigmo () décrit à l'aide de l'équation (10) ci-dessus, et dont la borne de sortie est connectée à l'entrée du multiplieur 26c précité ;

- un opérateur 27 élevant au carré la valeur de chaque valeur issue du soustracteur 25 ;

- un opérateur 28 stockant au fur et à mesure de leur production les composantes issues de l'opérateur 27 et les accumulant selon l'opération définie à l'aide de l'équation (9) précitée et dont la sortie produit un signal numérique dont la valeur est représentative du critère de minimisation des distances entre l'image à projeter et l'image corrigée en cours d'adaptation ;

- un opérateur 29 recevant la valeur CRITERE issue de la sortie de l'opérateur 28 et la comparant à une valeur de seuil prédéterminée pour arrêter l'adaptation de la matrice B en cours de correction quand CRITERE est inférieur à ladite valeur prédéterminée ;

- un opérateur 30 pour déterminer une modification de chaque cellule de chaque colonne $C_i$ de la matrice en cours d'adaptation *B* ou de chaque sous-colonne déterminée dans le registre 20 de façon à réduire l'erreur déterminée à l'aide de CRITERE.

Selon les divers modes de réalisation de l'invention, l'opérateur 30 exécute :

- un algorithme de descente de gradient ;
- un algorithme du simplexe ;
- un algorithme de recuit simulé ;
- un algorithme d'optimisation dit "quasi-Newton".

Particulièrement dans la mise en oeuvre d'un algorithme de descente de gradient, l'opérateur 30 comporte :

- un circuit pour ajuster la valeur de départ de chaque cellule de la sous-colonne en cours d'optimisation ;
- un circuit pour ajuster le pas de départ de l'algorithme ; et
- un circuit pour adapter le pas de résolution dans le cas d'une descente de gradient de type adaptatif.

11 est entendu que ces divers circuits et opérateurs peuvent être réalisés à l'aide de fonctions préprogrammées exécutés à l'aide de circuits microprogrammés comme des microprocesseurs ou des processeurs de traitement de signal comme des DSP.

Dans un autre mode de réalisation du procédé de l'invention, le traitement adaptatif est contrôlé de sorte que CRITERE porte sur un critère de minimisation de l'erreur établi de façon à respecter les transitions dans l'image à projeter. A cette fin, on applique un opérateur matriciel de gradient sur l'image à projeter et on teste la minimisation sur le gradient de l'image à projeter et le gradient de l'image d'origine. De manière générale, l'opérateur gradient porte sur la matrice de simulation de l'image après dédoublement, notée *DxB*

Ce critère a été étudié afin de mieux respecter les transitions dans l'image, en effet, le critère des distances dont la mise en oeuvre est exposé plus haut à l'aide de la figure 4 ne tient pas compte de l'environnement du point traité contrairement à la dérivée. La correction adaptative appliquée est alors capable de produire la visualisation d'une image dont les colonnes ont même gradient que dans l'image d'origine.

Ainsi qu'il est connu, la dérivée d'une colonne est obtenue en multipliant cette colonne par un opérateur ou matrice *Grad* de la forme suivante :

$$Grad = \begin{bmatrix} 3 & -1 & -0.5 & 0 \\ -1 & 3 & -1 & -0.5 \\ -0.5 & -1 & 3 & -1 \\ 0 & -0.5 & -1 & 3 \end{bmatrix} \qquad (11)$$

L'opérateur *Grad* de l'équation (11) a été indique dans une matrice 4x4 si la sous-colonne traitée est de dimension 4. Il est connu de réaliser un opérateur *Grad* sous forme d'une matrice NxN si le vecteur à dériver est de dimension N. De plus, l'invention s'applique facilement au cas où l'adaptation est exécuté sur des lignes et elle peut être combinée dans les deux directions pour corriger des dédoublements combinés.

L'opérateur *Grad* est appliqué au niveau des opérateurs 26 sur la colonne de l'image en cours d'adaptation et sur le registre 24 maintenant la colonne de l'image réellement visualisée telle qu'elle est synthétisée dans le module de correction à l'aide de la matrice D. En contrepartie, on est obligé de traiter les colonnes comme une seule entité. On ne peut pas séparer une colonne en sous-colonne. Il est donc possible d'adapter simplement le circuit de correction représenté à la figure 4 pour réaliser un critère d'adaptation par minimisation d'erreur sur les dérivées.

Selon un autre aspect de l'invention, l'étape de minimisation du critère CRITERE expliqué dans les deux modes de réalisation précédents comporte le calcul d'une combinaison linéaire prédéterminée d'un critère de distance *critère_distance* comme selon ce qui a été expliqué directement à la figure 4 et d'un critère sur les dérivées, *critère_dérivée* qui a été expliqué ci-après à l'aide de la matrice Grad.

Le critère d'adaptation par minimisation de l'erreur est maintenant égal à :

$$CRITERE = alpha * critère\_dis\tan ce + beta * critère\_dérivée \qquad (12)$$

avec *alpha + beta* = 1.

Les coefficients alpha et beta sont déterminés par avance de manière à accélérer la minimisation de l'erreur.

Selon un autre aspect de l'invention, l'étape de calcul du critère de minimisation de l'erreur comporte une étape de calcul du logarithme pour tenir compte de la dynamique de l'oeil.

L'oeil possède une réponse logarithmique. Il est plus sensible dans les faibles intensités que dans les grandes intensités. L'idée à la base de ce mode de réalisation est donc de rentrer une fonction logarithmique dans le calcul du critère, que ce soit par l'une quelconque des trois variantes décrites ci-dessus sur les distances, sur les dérivées ou sur leur combinaison linéaire.

Le critère de distance était déterminé à l'équation (9) et en le modifiant selon l'invention pour tenir compte de la sensibilité de l'oeil humain, il devient :

$$CRIT\_LOG = \sum_i (\log(D * sigmo(C_i) + eps) - \log(V * Rapp + eps))^2 \quad (14)$$

équation dans laquelle *eps* est déterminé à une valeur différente de 0 pour éviter d'avoir une valeur indéterminée log (0). Sa valeur a été testée manuellement afin d'atteindre son optimum.

Le critère sur les dérivées est adapté de même en utilisant les relations suivantes dans lesquelles critère_dérivée est considéré comme une fonction des variables associées à chaque colonne $C_i$ de la matrice *A* corrigée en cours d'adaptation :

$$\frac{\partial critère\_dérivée}{\partial C_i} = \sum_i 2 * Vect(C_i) * \frac{\partial}{\partial C_i}\big(Vect(C_i)\big) \quad (15)$$

avec

$$Vect(S) = log(D \times sigmo(S) + eps) - log(V \times Rapp + eps) \quad (16)$$

$$\frac{\partial}{\partial C_i}(Vect(C_i)) = \begin{bmatrix} K1(1,i)/K2(1,i) \\ K1(2,i)/K2(2,i) \\ \\ ... \\ \\ K1(N,i)/K2(N,i) \end{bmatrix} \quad (17)$$

avec

$$K1(j,i) = D_{j,i} * \frac{\partial}{\partial C_i} sigmo(C_i) \quad (18)$$

$$K2(j,i) = \sum_l D_{j,l} * sigmo(C_l) + eps$$

Le module 11 de correction de l'image produisant l'image B corrigée à l'aide de l'un ou l'autre des critères de minimisation de l'erreur E définie à la relation (8) peut alors être doté de circuits de calcul exécutant les relations (15) à (18) selon l'architecture du module décrit à l'aide de la figure 4.

**Revendications**

1. Procédé de correction d'image pour un projecteur d'images tête haute, **caractérisé en ce qu'**il comporte les étapes de :

   - production d'une image numérique sous forme d'une matrice dont chaque cellule représente un point de l'image à visualiser par projection ;
   - application d'un traitement de correction dépendant des caractéristiques optiques et géométriques du pare-brise produisant une déformation de l'image projetée de sorte que l'effet de dédoublement de l'image visualisée soit réduit ;
   - production du flux lumineux vers le pare-brise.

2. Procédé selon la revendication 1, **caractérisé en ce que** l'étape de traitement de correction de l'image consiste à décaler, dans une direction opposée à la direction de dédoublement, chaque ligne horizontale de la matrice produite d'un nombre prédéterminé de lignes d'image.

3. Procédé selon l'une des revendications précédentes, **caractérisé en ce que** l'étape de traitement de correction consiste à produire une matrice de correction calculée par inversion matricielle d'une matrice caractéristique du dédoublement d'image produit par le pare-brise et à appliquer un produit matriciel avec la matrice à afficher pour produire la matrice corrigée à projeter vers le pare-brise.

4. Procédé selon la revendication 3, **caractérisé en ce que** l'étape de traitement de correction comporte de plus une étape de décalage des valeurs de la matrice corrigée de sorte qu'aucune valeur de la matrice ne soit négative.

5. Procédé selon la revendication 4, **caractérisé en ce que** l'étape de décalage des valeurs de la matrice corrigée est suivie d'une étape de réduction de la dynamique de la matrice corrigée.

6. Procédé selon la revendication 5, **caractérisé en ce que**, en fonction des contrastes mesurés sur la matrice corrigée une étape d'amplification des contrastes sur l'image générée initialement est prévue de façon à apporter une image de projection présentant des contrastes supérieurs à un seuil prédéterminé.

7. Procédé selon l'une des revendications 2 ou 3, **caractérisé en ce que** l'étape de traitement de correction consiste à produire une matrice d'erreur, constituée par la différence entre une matrice de simulation (*DxB*) de l'effet de dédoublement introduit par le pare-brise et la matrice A effectivement générée, puis à produire un critère d'erreur et à modifier les cellules de la matrice (*B*) de l'image à projeter en cours d'adaptation, de façon à minimiser la matrice d'erreur et/ou une mesure scalaire de celle-ci.

8. Procédé selon la revendication 7, **caractérisé en ce que** l'étape de production d'un critère d'erreur consiste à projeter les valeurs de ladite matrice de simulation (DxB) de l'effet de dédoublement de l'image à projeter dans un espace de valeurs compris entre 0 et 1, à en déduire un critère scalaire d'erreur selon une fonction prédéterminée, comme la somme des valeurs absolues des écarts entre la matrice de simulation et de la matrice à projeter et à modifier les cellules de la matrice à projeter de façon à ce que le critère scalaire d'erreur soit inférieur à un seuil prédéterminé.

9. Procédé selon la revendication 8, **caractérisé en ce que** chaque colonne de la matrice à projeter est, au cours du processus de minimisation de l'erreur, partagé en plusieurs sous-colonnes pour réduire le nombre de composants de minimisation.

10. Procédé selon la revendication 8 ou 9, **caractérisé en ce que** le critère de minimisation de l'erreur est établi de façon à respecter les transitions dans l'image à projeter, en appliquant un opérateur matriciel de gradient sur l'image à projeter et en testant la minimisation sur le gradient de l'image à projeter et le gradient de l'image d'origine.

11. Procédé selon la revendication 10, **caractérisé en ce que** l'étape de minimisation du critère comporte le calcul d'une combinaison linéaire prédéterminée d'un critère de distance et d'un critère sur les dérivées.

**12.** Procédé selon la revendication 11, **caractérisé en ce que** l'étape de calcul du critère de minimisation de l'erreur comporte une étape de calcul du logarithme pour tenir compte de la dynamique de l'oeil.

**13.** Dispositif pour la mise en oeuvre du procédé selon l'une quelconque des revendications précédentes pour son application à un projecteur d'images tête haute sur un pare-brise de véhicule automobile, **caractérisé en ce qu'**il comporte :

- un générateur (10) d'images à projeter ;
- un correcteur d'images (11) appliquant un traitement de correction dépendant des caractéristiques optiques et géométriques du pare-brise produisant une déformation de l'image projetée de sorte que l'effet de dédoublement de l'image visualisée soit réduit ;
- un projecteur d'images (12) vers le pare-brise (2) qui reçoit l'image après traitement et produit un flux lumineux à réfléchir au moins partiellement vers le pare-brise.

Figure 1

1

2

6

7

8

9

5

3

4

Figure 2

10

11

12

Figure 3

S1

S2

S3

S4

Figure 4

**Office européen des brevets**

**RAPPORT DE RECHERCHE EUROPEENNE**

Numéro de la demande

EP 02 29 2927

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 805 119 A (ESKINE) 8 septembre 1998 (1998-09-08) * colonne 2, ligne 43 - colonne 3, ligne 14 * * colonne 8, ligne 64 - colonne 9, ligne 25 * --- | 1,13 | G02B27/01 |
| A | US 5 302 964 A (HUGHES AIRCRAFT ) 12 avril 1994 (1994-04-12) * colonne 2, ligne 25 - ligne 43 * --- | 1,13 | |
| A | US 5 726 670 A (TABATA) 10 mars 1998 (1998-03-10) * colonne 6, ligne 32 - ligne 50; figure 6 * * colonne 7, ligne 18 - ligne 26 * --- | 2 | |
| P,A | DE 100 46 019 A (ESG ELEKTRONIKSYSTEM UND LOGIS) 28 mars 2002 (2002-03-28) * abrégé * ----- | 1,13 | |

**DOMAINES TECHNIQUES RECHERCHES (Int.Cl.7)**

G02B

Le présent rapport a été établi pour toutes les revendications

| Lieu de la recherche | Date d'achèvement de la recherche | Examinateur |
|---|---|---|
| LA HAYE | 24 avril 2003 | Soulaire, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 29 2927

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-04-2003

| Document brevet cité au rapport de recherche | | Date de publication | Membre(s) de la famille de brevet(s) | | Date de publication |
|---|---|---|---|---|---|
| US 5805119 | A | 08-09-1998 | AUCUN | | |
| US 5302964 | A | 12-04-1994 | AUCUN | | |
| US 5726670 | A | 10-03-1998 | JP | 6038219 A | 10-02-1994 |
| DE 10046019 | A | 28-03-2002 | DE | 10046019 A1 | 28-03-2002 |

EPO FORM P0460

Pour tout renseignement concernant cette annexe : voir Journal Officiel de l'Office européen des brevets, No.12/82